# EUROPÄISCHE PATENTSCHRIFT

(11) **EP 3 966 358 B1**
(45) Veröffentlichungstag und Bekanntmachung des Hinweises auf die Patenterteilung: **02.08.2023**
(21) Anmeldenummer: 20717630.6
(22) Anmeldetag: 06.04.2020
(51) Int. Cl.: C22C 21/02, C22C 21/04, C22F 1/043

(54) **BAUTEIL, INSBESONDERE FÜR EIN FAHRZEUG, SOWIE VERFAHREN ZUM HERSTELLEN EINES SOLCHEN BAUTEILS**
COMPONENT, IN PARTICULAR FOR A VEHICLE, AND METHOD FOR PRODUCING SUCH A COMPONENT
COMPOSANT, EN PARTICULIER POUR UN VÉHICULE, AINSI QUE PROCÉDÉ DE FABRICATION D'UN TEL COMPOSANT

(30) Priorität: 06.05.2019 DE 102019003187
(43) Veröffentlichungstag der Anmeldung: 16.03.2022
(73) Patentinhaber: Mercedes-Benz Group AG, 70372 Stuttgart (DE)
(72) Erfinder: BEHR, Robert, 73249 Wernau (DE); SCHIETINGER, Bernd, 73733 Esslingen (DE); WEBER, Juergen, 74354 Besigheim (DE)
(74) Vertreter: Novagraaf Group
(86) Internationale Anmeldenummer: PCT/EP2020/059734
(87) Internationale Veröffentlichungsnummer: WO 2020/224894

(56) Entgegenhaltungen:
- EP-A1- 3 165 620
- JP-A- H04 325 648
- RU-C1- 2 688 039

## Beschreibung

Die Erfindung betrifft ein Bauteil, insbesondere für ein Fahrzeug. Ferner betrifft die Erfindung ein Verfahren zum Herstellen eines solchen Bauteils.

Der DE 10 2015 221 643 A1 ist eine Aluminiumlegierung als bekannt zu entnehmen. Die Aluminiumlegierung weist 3,5 bis 6,0 Gewichtsprozent (Gew.-%) Magnesium auf. Des Weiteren offenbart die DE 10 2019 106 979 A1 ein Verfahren zur Herstellung eines dreidimensionalen Aluminiumlegierungsteils, wobei ein Aluminiumlegierungspulver-Zuführungsmaterial bereitgestellt wird. Außerdem ist aus der JP-H04-325648 A ein Verfahren zur Herstellung einer gesinterten Aluminiumlegierung bekannt. Außerdem offenbart die EP 3 165 620 A1 eine Aluminiumlegierung. Des Weiteren ist auch der RU 2 688 039 C1 eine Aluminiumlegierung als bekannt zu entnehmen.

Aufgabe der vorliegenden Erfindung ist es, ein Bauteil und ein Verfahren zu schaffen, sodass das Bauteil auf besonders vorteilhafte Weise hergestellt werden kann.

Diese Aufgabe wird durch ein Bauteil mit den Merkmalen des Patentanspruchs 1 sowie durch ein Verfahren mit den Merkmalen des Patentanspruchs 9 gelöst. Vorteilhafte Ausgestaltungen mit zweckmäßigen Weiterbildungen der Erfindung sind in den übrigen Ansprüchen angegeben.

Ein erster Aspekt der Erfindung betrifft ein Bauteil, vorzugsweise für ein Fahrzeug. Somit gehört zur Erfindung vorzugsweise auch eine Verwendung des Bauteils, wobei das Bauteil für ein beziehungsweise in einem Fahrzeug, insbesondere für ein beziehungsweise in einem Kraftfahrzeug, verwendet wird. Das Bauteil ist zumindest in einem Teilbereich mittels eines additiven Fertigungsverfahrens hergestellt. Dabei ist zumindest der Teilbereich aus einer Aluminiumlegierung hergestellt. Mit anderen Worten ist das Bauteil zumindest in einem Teilbereich aus einer Aluminiumlegierung mittels eines additiven Fertigungsverfahrens hergestellt, wobei das additive Fertigungsverfahren auch als generatives Fertigungsverfahren bezeichnet wird. Unter dem Merkmal, dass das Bauteil zumindest in dem Teilbereich mittels eines additiven Fertigungsverfahrens hergestellt ist, ist insbesondere zu verstehen, dass das Bauteil vollständig oder zumindest teilweise mittels eines additiven Fertigungsverfahrens hergestellt ist beziehungsweise wird. Zumindest der Teilbereich ist somit ein additiv hergestelltes Bauteilvolumen, welches aus der genannten Aluminiumlegierung, welche auch als Aluminiumbasis-Legierung bezeichnet wird, hergestellt ist beziehungsweise wird.

Die Aluminiumlegierung und somit das Teilvolumen weisen 12 Gew.-% bis 40 Gew.-% Silizium auf. Mit anderen Worten weisen die Aluminiumlegierung und somit zumindest das Bauteilvolumen einen Siliziumgehalt von 12 Gew.-% bis 40 Gew.-% auf. Wieder mit anderen Worten ausgedrückt ist Silizium eine erste Komponente der Aluminiumlegierung, wobei die erste Komponente einen Massenanteil von 12 Prozent (%) bis 40% aufweist. Des Weiteren weist die Aluminiumlegierung beziehungsweise das Bauteilvolumen 0,3 Gew.-% bis 4 Gew.-% Kupfer (Cu), 0,2 Gew.-% bis 0,7 Gew.-% Magnesium (Mg), maximal 1 Gew.-% Eisen (Fe) und maximal 0,5 Gew.-% Zirkonium (Zr) auf. Dies bedeutet, dass Kupfer eine zweite Komponente, Magnesium eine dritte Komponente, Eisen eine vierte Komponente und Zirkonium eine fünfte Komponente der einfach auch als Legierung bezeichneten Aluminiumlegierung ist, wobei die zweite Komponente einen Massenanteil von 0,3% bis 4%, die dritte Komponente einen Massenanteil von 0,2% bis 0,7%, die vierte Komponente einen Massenanteil von maximal 1% und die fünfte Komponente einen Massenanteil von maximal 0,5% aufweist.

Wieder mit anderen Worten ausgedrückt liegt der Massenanteil der ersten Komponente in einem Bereich von einschließlich 12 Prozent bis einschließlich 40 Prozent. Der Massenanteil der zweiten Komponente liegt in einem Bereich von einschließlich von 0,3 Prozent bis einschließlich 4 Prozent, der Massenanteil der dritten Komponente liegt in einem Bereich von einschließlich 0,2 Prozent bis einschließlich 0,7 Prozent, der Massenanteil der vierten Komponente beträgt höchstens 1 Prozent, und der Massenanteil der fünften Komponente beträgt höchstens 0,5 Prozent. Als Rest weist die Aluminiumlegierung Aluminium mit einzeln jeweils maximal 0,3 Gew.-% und insgesamt maximal 1,5 Gew.-% weiteren Begleitelementen und/oder herstellungsbedingten Verunreinigungen auf. Mit anderen Worten weisen die weiteren Begleitelemente und/oder die Verunreinigungen einzeln jeweils einen Massenanteil von maximal 0,3 Prozent und insgesamt, das heißt in Summe einen Massenanteil von maximal 1,5 Prozent auf.

Vorzugsweise ist oder stammt das additive Fertigungsverfahren, mittels welchem das Bauteil zumindest in dem Teilbereich hergestellt ist, aus der Gruppe selektive Laserschmelzen, selektiven Elektronenstrahlschmelzen, selektives Lasersintern, selektives Elektronenstrahlsintern, Drahtauftragsschweißen und Pulverauftragsschweißen. Das erfindungsgemäße Bauteil ist ein Aluminiumbauteil, wobei dadurch, dass zumindest der Teilbereich mittels eines additiven Fertigungsverfahrens und aus der beschriebenen Aluminiumlegierung gebildet ist, die folgenden vorteilhaften Eigenschaften aufweisen kann:
- hohe statische und/oder dynamische Festigkeit bei geringem Gewicht, sodass das Bauteil in Leichtbauweise hergestellt werden kann; und/oder
- hohe tribologische Beständigkeit; und/oder geringer thermischer Ausdehnungskoeffizient.

Der Erfindung liegen dabei insbesondere die folgenden Erkenntnisse zugrunde: Herkömmliche, allgemein bekannte siliziumhaltige Gusslegierungen können durch entsprechende Legierungs- und Wärmebehandlungskonzepte gute Festigkeitswerte bei guter bis sehr guter Bauteilausbringung aufweisen. Allerdings sind die Gestaltungsfreiheiten durch die Randbedingungen des Gießprozesses limitiert. So sind beispielsweise in der Regel keine bionischen Konstruktionen auf gießtechnischem Wege umsetzbar. Selbst im Druckguss sind Abkühlraten von nur ca. 40 Kelvin pro Sekunde möglich. Dadurch kann ein relativ großes Materialgefüge geschaffen werden. Dies bedeutet im Falle von untereutektischen Aluminium-Gusslegierungen (eutektische Gusslegierungen haben circa 12 Gew.-% Silizium), dass die primär ausgeschiedene Aluminiumphase einen Dendritenarmabstand von circa 20 Mikrometern aufweist. Übereutektische Aluminium-Gusslegierungen, welche dann eher im Kokillenguss beziehungsweise Sandguss dargestellt werden, weisen in der Regel relativ große Silizium-Partikel (> 10 Mikrometer, eher gröber) auf. Diese großen Phasen bei den genannten Gusslegierungen wirken sich insgesamt negativ auf die mechanischen Eigenschaften, insbesondere auf die dynamischen Festigkeitskennwerte, aus. Die Verwendung von demgegenüber höheren Siliziumanteilen in Gusslegierungen ist daher nur eingeschränkt möglich. Es ist jedoch bekannt, die Legierungselemente Kupfer, Magnesium und Zirkonium zur Festigkeitssteigerung einzusetzen.

Außerdem sind sprühkompaktierte Produkte bekannt. Vergleichsweise höhere Siliziumgehalte sind bei solchen sprühkompaktierten Produkten einfacherer realisierbar. Aluminiumbasislegierungen mit deutlich höheren Siliziumgehalten sind erhältlich. Solche Legierungen werden beispielsweise verwendet, um Zylinderlaufbahnen herzustellen. Der Herstellprozess erfolgt über ein Sprühkompaktieren verdüster Pulver mit Nachbehandlung, beispielsweise Strangpressen. Die Kühlrate beim Sprühkompaktieren ist mit 10³ bis 10⁴ Kelvin pro Sekunde deutlich höher als beim Gießen. Daraus resultiert in der Folge ein deutlich feineres Gefüge als bei konventionellen Gusslegierungen. Somit sind auch höhere Anteile von dann feinerem Silizium positiv hinsichtlich der Bauteilfestigkeit.

Die Erfindung nutzt nun eine additive Fertigung mit einer Aluminiumbasis-Legierung. Bei der additiven Fertigung, beispielsweise bei selektivem Laseraufschmelzen können mit 10⁵ bis 10⁶ Kelvin pro Sekunde nochmals deutlich höhere Kühlraten erzielt werden. Daraus kann ein nochmals feineres Gefüge als bei sprühkompaktierten Bauteilen oder gar bei Gussbauteilen resultiert. Aluminiumbasis-Legierungen mit Siliziumgehalten bis circa 12 Gew.-% werden mithilfe additiver Fertigungstechnologien bearbeitet. Legierungen sind hierbei in der chemischen Zusammensetzung in der Regel angelehnt an konventionelle Gusslegierungen wie beispielsweise AISi9Cu3, AlSi7Mg, AISi10Mg. Die erzielten Werkstoffkennwerte sind bezogen auf den kostenintensiven Herstellungsprozess durch die additive Fertigung in der Regel eher unbefriedigend. Hohe Festigkeitskennwerte bei additiv gefertigten Aluminium-Bauteilen werden durch die Verwendung eines Legierungselements insbesondere in Form von Skandium erzielt. Dies ist jedoch sehr kostenintensiv. Daher werden durch Verwendung von Skandium die Herstellkosten stark erhöht.

Diese vorgenannten Probleme und Nachteile können durch die Erfindung vermieden werden. Bei der Aluminiumlegierung ist Silizium das Hauptlegierungselement. Durch einen sehr schnellen, bei dem additiven Fertigungsverfahren realisierbaren Abkühlungsprozess kann ein sehr feines Grundgefüge zumindest des Teilbereichs beziehungsweise Bauteilvolumens realisiert werden. Der hohe Siliziumgehalt wirkt festigungssteigernd und nicht etwa lebensdauerminimierend. Durch die bei additiver Herstellung sehr hohen Abkühlraten, insbesondere im Vergleich zum Sprühkompaktieren, kann bei gleicher chemischer Zusammensetzung ein noch feineres Gefüge mit besseren Festigkeits- und/oder Dehnungseigenschaften realisiert werden. Gängige Legierungskonzepte, wie aus der klassischen Gießtechnik von Aluminium bekannt, können übernommen werden. So kann beispielsweise die festigkeitssteigernde Wirkung von Ausscheidungshärteelementen wie Kupfer, Magnesium und Zirkonium genutzt werden. Allerdings wird auf die Verwendung von Nickel als Legierungselement verzichtet, sodass die erfindungsgemäße Aluminiumlegierung frei von Nickel ist beziehungsweise sodass Nickel höchstens zu den herstellungsbedingten Verunreinigungen gehört.

Der Rest wird auch als Restmenge bezeichnet und umfasst Aluminium mit herstellungsbedingten Begleitelementen wie Nickel, Mangan, Titan, Zink Vanadium, Chrom, Molybdän, Strontium mit einzeln jeweils maximal 0,3 Gew.-% und in Summe maximal 1,5 Gew.-%. Mit anderen Worten kann es sich bei den herstellungsbedingten Begleitelementen um die herstellungsbedingten Verunreinigungen handeln. Insgesamt ist erkennbar, dass die Aluminiumlegierung in dem additiv hergestellten Bauteilvolumen einen Siliziumgehalt von 12 Gew.-% bis 40 Gew.-%, einen Kupfergehalt von 0,3 Gew.-% bis 4 Gew.-%, einen Magnesiumgehalt von 0,2 Gew.-% bis 0,7 Gew.-%, einen Eisengehalt von maximal 1 Gew.-% und einen Zirkoniumgehalt von maximal 0,5 Gew.-% aufweist.

Als besonders vorteilhaft hat es sich gezeigt, wenn der Kupferanteil der Aluminiumlegierung und somit in dem additiv hergestellten Bauteilvolumen in einem Bereich von einschließlich 0,3 Gew.-% bis einschließlich 2,1 Gew.-%, insbesondere in einem Bereich von einschließlich 0,5 Gew.-% bis einschließlich 0,8 Gew.-%, liegt. Mit anderen Worten hat es sich als besonders vorteilhaft gezeigt, wenn die Aluminiumlegierung 0,3 Gew.-% bis 2,1 Gew.-%, insbesondere 0,5 Gew.-% bis 0,8 Gew.-%, Kupfer aufweist. Wieder mit anderen Worten ausgedrückt liegt der Massenanteil der zweiten Komponente in einem Bereich von einschließlich 0,3 Prozent bis einschließlich 2,1 Prozent, vorzugsweise in einem Bereich von einschließlich 0,5 Prozent bis einschließlich 0,8 Prozent.

Als weiterhin besonders vorteilhaft hat es sich gezeigt, wenn die Aluminiumlegierung 0,2 Gew.-% bis 0,6 Gew.-%, insbesondere 0,2 Gew.-% bis 0,5 Gew.-%, Magnesium aufweist. Mit anderen Worten liegt vorzugsweise der Massenanteil der dritten Komponente in einem Bereich von einschließlich 0,2 Prozent bis einschließlich 0,6 Prozent, insbesondere in einem Bereich von einschließlich 0,2 Prozent bis einschließlich 0,5 Prozent. Wieder mit anderen Worten ausgedrückt ist es vorzugsweise vorgesehen, dass der Magnesiumanteil der Aluminiumlegierung und somit in dem additiv hergestellten Bauteilvolumen in einem Bereich von einschließlich 0,2 Gew.-% bis einschließlich 0,6 Gew.-%, insbesondere in einem Bereich von einschließlich 0,2 Gew.-% bis einschließlich 0,5 Gew.-%, liegt.

Eine weitere Ausführungsform zeichnet sich dadurch aus, dass die Aluminiumlegierung mindestens 0,05 Gew.-% und maximal 0,35 Gew.-% Zirkonium aufweist. Mit anderen Worten ist es vorzugsweise vorgesehen, dass der Massenanteil der fünften Komponente (Zirkonium) mindestens 0,05 Prozent und maximal 0,35 Prozent beträgt. Wieder mit anderen Worten ausgedrückt ist es vorzugsweise vorgesehen, dass der Zirkoniumanteil in der Aluminiumlegierung und somit in dem additiv hergestellten Bauteilvolumen mindestens 0,05 Gew.-% und maximal 0,35 Gew.-% beträgt.

Bei einer besonders vorteilhaften Ausführungsform der Erfindung beträgt der Eisenanteil in der Aluminiumlegierung und somit in dem additiv hergestellten Bauteilvolumen maximal 0,5 Gew.-% und insbesondere maximal 0,35 Gew.-%. Mit anderen Worten ist es vorzugsweise vorgesehen, dass die Aluminiumlegierung maximal 0,5 Gew.-%, insbesondere maximal 0,35 Gew.-%, Eisen aufweist. Wieder mit anderen Worten ausgedrückt ist es vorzugsweise vorgesehen, dass der Massenanteil der vierten Komponente (Eisen) höchstens 0,5 Prozent, insbesondere höchstens 0,35 Prozent, ist.

Bei einer besonders vorteilhaften Ausführungsform der Erfindung liegt das Bauteil vollständig oder zumindest abschnittsweise in einem wärmebehandelten Zustand vor. Mit anderen Worten ist es vorzugsweise vorgesehen, dass das Bauteil zumindest teilweise wärmebehandelt ist. Darunter ist insbesondere zu verstehen, dass das Bauteil zumindest teilweise einer Wärmebehandlung unterzogen ist. Dabei hat es sich als besonders vorteilhaft gezeigt, wenn das Bauteil zumindest in dem Teilbereich einer Wärmebehandlung unterzogen ist, sodass zumindest der Teilbereich des Bauteils wärmebehandelt ist.

Dabei ist es vorzugsweise vorgesehen, dass das Bauteil zumindest teilweise und dabei beispielsweise zumindest in dem Teilbereich spannungsarmgeglüht und/oder lösungsgeglüht und/oder warm ausgelagert ist. Mit anderen Worten ist es vorzugsweise vorgesehen, dass das einfach auch als Wärmebehandlung bezeichnete Wärmebehandlungsverfahren ein Spannungsarmglühen und/oder ein Lösungsglühen und/oder ein Warmauslagern umfasst.

Um besonders vorteilhafte, insbesondere mechanische, Eigenschaften des Bauteils zu realisieren, ist es in weiterer Ausgestaltung der Erfindung vorgesehen, dass die Aluminiumlegierung 12 Gew.-% bis 18 Gew.-%, insbesondere 13,5 Gew.-% bis 15,5 Gew.-%, Silizium aufweist. Mit anderen Worten ist es vorzugsweise vorgesehen, dass der Massenanteil der ersten Komponente (Silizium) vorzugsweise in einem Bereich von einschließlich 12 Prozent bis einschließlich 18 Prozent, insbesondere in einem Bereich von einschließlich 13,5 Prozent bis einschließlich 15,5 Prozent, liegt.

Ein zweiter Aspekt der Erfindung betrifft ein Verfahren zum Herstellen eines Bauteils. Bei einem ersten Schritt des Verfahrens wird ein Pulver oder ein Draht bereitgestellt, wobei das Pulver beziehungsweise der Draht aus einer Aluminiumlegierung, insbesondere gemäß dem ersten Aspekt der Erfindung, gebildet ist. Die Aluminiumlegierung weist 12 Gew.-% bis 40 Gew.-% Silizium als erste Komponente, 0,3 Gew.-% bis 4 Gew.-% Kupfer als zweite Komponente, 0,2 Gew.-% bis 0,7 Gew.-% Magnesium als dritte Komponente, maximal 1 Gew.-% Eisen als vierte Komponente, maximal 0,5 Gew.-% Zirkonium als fünfte Komponente und als Restaluminium mit einzeln jeweils maximal 0,3 Gew.-% und insgesamt maximal 1,5 Gew.-% herstellungsbedingten Verunreinigungen auf. Die zuvor genannten Komponenten sind Legierungselemente, durch welche beziehungsweise durch deren Massenanteile besonders vorteilhafte Eigenschaften der Aluminiumlegierung und somit des Bauteils realisiert werden können.

Bei einem sich vorzugsweise an den ersten Schritt anschließenden zweiten Schritt des Verfahrens wird zumindest ein Teilbereich des Bauteils aus dem Pulver beziehungsweise aus dem Draht mittels eines additiven Fertigungsverfahrens hergestellt, sodass das Bauteil zumindest teilweise oder vollständig aus der Aluminiumlegierung mittels eines additiven Fertigungsverfahrens hergestellt wird.

Dabei hat es sich als besonders vorteilhaft gezeigt, wenn das Bauteil, insbesondere nach dem zweiten Schritt, zumindest teilweise, insbesondere in dem Teilbereich, einem optional vorgesehenen Wärmebehandlungsverfahren unterzogen wird. Insbesondere ist es denkbar, dass das Bauteil zumindest teilweise, insbesondere zumindest in einem Teilbereich, oder vollständig genau einem Wärmebehandlungsverfahren oder mehreren Wärmebehandlungsverfahren unterzogen wird. Optional kann eine Nachverdichtung des Bauteils vor und/oder während und/oder nach dem wenigstens einen Wärmebehandlungsverfahren erfolgen. Insbesondere können durch die Erfindung die folgenden Vorteile realisiert werden:
- hohe spezifische Festigkeit, hohe tribologische Beständigkeit und geringer thermischer Ausdehnungskoeffizient des Bauteils;
- Freiheitsgrade in der Gestaltung des Bauteils durch additive Fertigung, sodass beispielsweise durch das additive Fertigungsverfahren wenigstens eine oder mehrere bionische Strukturen hergestellt werden können;
- Möglichkeit zur Funktionsintegration.

Die Erfindung nutzt die Erkenntnis, dass Silizium einen relativ geringen thermischen Ausdehnungskoeffizienten aufweist. Die Verwendung eines hohen Siliziumgehalts lässt daher an der Gesamtlegierung einen nur sehr geringen thermischen Ausdehnungskoeffizienten erwarten, welcher vorteilhaft sein kann, insbesondere bei Verwendung zur Herstellung eines Kurbelgehäuses. Somit kann es sich vorzugsweise bei dem Bauteil um ein Bauteil einer Verbrennungskraftmaschine, insbesondere einer Hubkolben-Verbrennungskraftmaschine, handeln. Vorzugsweise ist das Bauteil ein Kurbelgehäuse einer Verbrennungskraftmaschine. Die siliziumhaltige Aluminiumlegierung kann beispielsweise für tribologisch beanspruchte Bauteile verwendet werden. Insbesondere kann aus der Aluminiumlegierung beispielsweise eine Laufbahn für einen Kolben einer Hubkolbenmaschine hergestellt werden, sodass es sich bei dem Bauteil um eine Laufbahn für einen Kolben einer Hubkolbenmaschine handeln kann. Außerdem können bei der Erfindung kostenintensive Legierungselemente vermieden oder die Menge an solchen kostenintensiven Legierungselementen kann besonders gering gehalten werden, sodass das Bauteil besonders kostengünstig hergestellt werden kann.

Das zuvor genannte Lösungsglühen wird beispielsweise in einem Temperaturbereich von einschließlich 480 Grad Celsius bis einschließlich 530 Grad Celsius durchgeführt, insbesondere gefolgt von raschem Abschrecken und einer nachfolgenden Wärmeauslagerung.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Seitenansicht eines erfindungsgemäßen Bauteils; und
- Fig. 2: ein Flussdiagramm zum Veranschaulichen eines erfindungsgemäßen Verfahrens zum Herstellen des Bauteils.

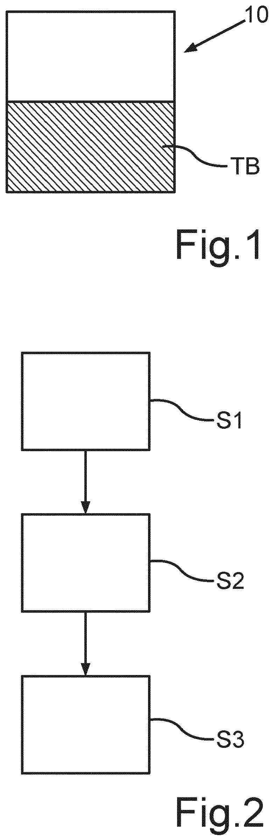

Fig. 1 zeigt in einer schematischen Seitenansicht ein Bauteil 10, insbesondere für ein Fahrzeug wie beispielsweise ein Kraftfahrzeug. Das Bauteil 10 ist beispielsweise ein Bauteil einer Verbrennungskraftmaschine, mittels welcher das Kraftfahrzeug antreibbar ist. Die Verbrennungskraftmaschine ist vorzugsweise eine Hubkolbenmaschine. Das Bauteil 10 kann beispielsweise ein Kurbelgehäuse der Verbrennungskraftmaschine sein. Um besonders vorteilhafte Eigenschaften des Bauteils 10 realisieren sowie das Bauteil 10 besonders vorteilhaft herstellen zu können, ist zumindest ein Teilbereich TB des Bauteils 10 aus einer Aluminiumlegierung mittels eines additiven Fertigungsverfahrens und somit additiv hergestellt. Insbesondere ist es denkbar, dass das Bauteil 10 vollständig mittels eines oder mittels des additiven Fertigungsverfahrens hergestellt ist. Alternativ oder zusätzlich ist es denkbar, dass das Bauteil 10 vollständig aus der genannten Aluminiumlegierung hergestellt ist. Alternativ ist auch vorstellbar, dass das Bauteil 10 abschnittsweise oder vollständig unter Verwendung mehrerer additiver Fertigungsverfahren hergestellt wird. Die Aluminiumlegierung wird auch als Aluminiumbasis-Legierung bezeichnet und weist 12 Gew.-% bis 40 Gew.-% Silizium als erste Komponente, 0,3 Gew.-% bis 4 Gew.-% Kupfer als zweite Komponente, 0,2 Gew.- % bis 0,7 Gew.-% Magnesium als dritte Komponente, maximal 1 Gew.-% Eisen als vierte Komponente und maximal 0,5 Gew.-% Zirkonium als fünfte Komponente auf. Die Komponenten sind jeweilige Legierungselemente, wobei die erste Komponente einen Massenanteil aufweist, welcher in einem Bereich von einschließlich 12 Prozent bis einschließlich 40 Prozent liegt. Die zweite Komponente weist einen Massenanteil auf, welcher in einem Bereich von einschließlich 0,3 Prozent bis einschließlich 4 Prozent liegt. Die dritte Komponente weist einen Massenanteil auf, welcher in einem Bereich von einschließlich 0,2 Prozent bis einschließlich 0,7 Prozent liegt. Die vierte Komponente weist einen Massenanteil auf, welcher höchstens beziehungsweise maximal 1 Prozent ist. Die fünfte Komponente weist einen Massenanteil auf, welcher höchstens beziehungsweise maximal 0,5 Prozent ist. Als Rest weist die Aluminiumlegierung Aluminium mit einzeln jeweils maximal 0,3 Gew.-% und insgesamt maximal 1,5 Gew.-% herstellungsbedingten Verunreinigungen auf. Mit anderen Worten weisen die herstellungsbedingten Verunreinigungen einzeln jeweils einen Massenanteil von höchstens 0,3 Prozent und insgesamt, das heißt in Summe einen Massenanteil von höchstens 1,5 Prozent auf.

Fig. 1 zeigt ein Flussdiagramm, anhand dessen im Folgenden ein Verfahren zum Herstellend des Bauteils 10 veranschaulicht wird. Bei einem ersten Schritt S1 des Verfahrens wird ein Ausgangsmaterial bereitgestellt. Dieses Ausgangsmaterial wird auch einfach als Material, Werkstoff oder Ausgangswerkstoff bezeichnet. Bei dem Ausgangsmaterial handelt es sich um einen Draht oder um ein Pulver, sodass bei dem ersten Schritt S1 des Verfahrens der Draht beziehungsweise das Pulver bereitgestellt wird. Das Ausgangsmaterial ist aus der zuvor genannten Aluminiumlegierung gebildet, sodass bei dem ersten Schritt S1 des Verfahrens die zuvor beschriebene Aluminiumlegierung in Draht- oder Pulverform bereitgestellt wird.

Bei einem zweiten Schritt S2 des Verfahrens wird zumindest der Teilbereich TB des Bauteils 10 aus dem Ausgangsmaterial, das heißt aus dem Pulver beziehungsweise aus dem Draht mittels des zuvor genannten additiven Fertigungsverfahrens hergestellt. Dies bedeutet, dass bei dem zweiten Schritt S2 des Verfahrens das additive Fertigungsverfahren durchgeführt wird. Mittels des additiven Fertigungsverfahrens wird das Bauteil 10 zumindest in dem Teilbereich TB aus der Aluminiumlegierung additiv gefertigt, das heißt additiv hergestellt.

Bei beziehungsweise nach dem zweiten Schritt S2 wird das Bauteil 10 bereitgestellt, welches vollständig oder zumindest teilweise mittels des additiven Fertigungsverfahrens hergestellt ist beziehungsweise wurde. Das additive Fertigungsverfahren ist beispielsweise ein aus der folgenden Gruppe ausgewähltes Verfahren: selektives Laserschmelzen, selektives Elektronenstrahlschmelzen, selektives Lasersintern, selektives Elektronenstrahlsintern, Drahtauftragsschweißen und Pulverauftragsschweißen. Es ist auch denkbar, mehrere additive Fertigungsverfahren aus der genannten Gruppe zu kombinieren.

Nach dem zweiten Schritt S2 des Verfahrens, insbesondere nach dem Bereitstellen des Bauteils 10, wird vorzugsweise und somit optional ein dritte Schritt S3 des Verfahrens durchgeführt. Bei dem dritten Schritt S3 des Verfahrens wird das Bauteil 10 zumindest teilweise, insbesondere zumindest in dem Teilbereich TB, wenigstens oder genau einem Wärmebehandlungsverfahren unterzogen. Bei einem Wärmebehandlungsverfahren kann es sich um Spannungsarmglühen handeln beziehungsweise das Wärmebehandlungsverfahren kann Spannungsarmglühen sein. Bei dem Spannungsarmglühen wird das Bauteil 10 zumindest teilweise bei einer Temperatur von 200 Grad Celsius bis 350 Grad Celsius über eine Zeitdauer von 30 Minuten bis 5 Stunden geglüht, besonders bevorzugt mit optional anschließender langsamer Abkühlung, um einen spannungsarm geglühten Zustand des Bauteils 10 zu erreichen. Hierdurch kann das Bauteil 10 als ein weiches Bauteil mit hoher Bruchdehnung, das heißt mit hoher Verformbarkeit und/oder geringer irreversibler Wärmeausdehnung realisiert werden.

Beispielsweise alternativ zu dem Spannungsarmglühen kann ein Lösungsglühen mit anschließendem Warmauslagern durchgeführt werden. Das Warmauslagern wird auch als Warmauslagerung bezeichnet. Mit anderen Worten ist es vorzugsweise vorgesehen, dass das Wärmebehandlungsverfahren alternativ ein Lösungsglühen und ein daran anschließendes Wärmeauslagern umfasst. Bei dem Lösungsglühen wird das Bauteil 10 zumindest teilweise bei einer Temperatur von 450 Grad Celsius bis 545 Grad Celsius über eine Zeitdauer von bis zu 12 Stunden geglüht, besonders bevorzugt mit anschließender rascher Abkühlung beziehungsweise Abschreckung des Bauteils 10 zur Erzeugung eines übersättigten Mischkristalls als Voraussetzung für ein effektives Warmauslagern im Anschluss. Nach dem Lösungsglühen erfolgt das zuvor genannte Warmauslagern des Bauteils 10 zur Ausscheidungshärtung. Beispielsweise wird das Bauteil 10 bei einer Temperatur von 150 Grad Celsius bis 240 Grad Celsius über eine Zeitdauer von 30 Minuten bis 12 Stunden warm ausgelagert. Ein Ziel kann dabei sein, eine hohe statische Festigkeit und/oder eine hohe dynamische Festigkeit des Bauteils 10 zu realisieren, beispielsweise im maximal ausgehärteten Zustand T6. Ein anderes Ziel kann sein, im Vergleich zu dem einen Ziel eine reduzierte Festigkeit des Bauteils 10 zu realisieren, jedoch mit geringerer irreversibler Wärmeausdehnung, insbesondere in dem überalterten Zustand T7.

### Bezugszeichenliste

- 10: Bauteil
- S1: erster Schritt
- S2: zweiter Schritt
- S3: dritter Schritt
- TB: Teilbereich

## Patentansprüche

1. Bauteil (10), welches zumindest in einem Teilbereich (TB) mittels eines additiven Fertigungsverfahrens hergestellt ist, wobei zumindest der Teilbereich (TB) aus einer Aluminiumlegierung hergestellt ist, welche aufweist:
- 12 Gew.-% bis 40 Gew.-% Silizium;
- 0,3 Gew.-% bis 4 Gew.-% Kupfer;
- 0,2 Gew.-% bis 0,7 Gew.-% Magnesium;
- maximal 1 Gew.-% Eisen;
- maximal 0,5 Gew.-% Zirkonium;
und als Rest Aluminium mit einzeln jeweils maximal 0,30 Gew.-% und insgesamt maximal 1,5 Gew.-% weiteren Begleitelementen und/oder herstellungsbedingten Verunreinigungen, wobei die weiteren Begleitelemente und/oder herstellungsbedingten Verunreinigungen Nickel, Mangan, Titan, Zink Vanadium, Chrom, Molybdän, Strontium sind.

2. Bauteil (10) nach Anspruch 1,
**dadurch gekennzeichnet, dass**
die Aluminiumlegierung 0,3 Gew.-% bis 2,1 Gew.-%, insbesondere 0,5 Gew.-% bis 0,8 Gew.-%, Kupfer aufweist.

3. Bauteil (10) nach Anspruch 1 oder 2,
**dadurch gekennzeichnet, dass**
die Aluminiumlegierung 0,2 Gew.-% bis 0,6 Gew.-%, insbesondere 0,2 Gew.-% bis 0,5 Gew.-%, Magnesium aufweist.

4. Bauteil (10) nach einem der vorhergehenden Ansprüche,
**dadurch gekennzeichnet, dass**
die Aluminiumlegierung mindestens 0,05 Gew.-% und maximal 0,35 Gew.-% Zirkonium aufweist.

5. Bauteil (10) nach einem der vorhergehenden Ansprüche,
**dadurch gekennzeichnet, dass**
die Aluminiumlegierung maximal 0,5 Gew.-%, insbesondere maximal 0,35 Gew.-%, Eisen aufweist.

6. Bauteil (10) nach einem der vorhergehenden Ansprüche,
**dadurch gekennzeichnet, dass**
das Bauteil (10) zumindest teilweise wärmebehandelt ist.

7. Bauteil (10) nach Anspruch 6,
**dadurch gekennzeichnet, dass**
das Bauteil (10) zumindest teilweise spannungsarmgeglüht und/oder lösungsgeglüht und/oder warmausgelagert ist.

8. Bauteil (10) nach einem der vorhergehenden Ansprüche,
**dadurch gekennzeichnet, dass**
die Aluminiumlegierung 12 Gew.-% bis 18 Gew.-%, insbesondere 13,5 Gew.-% bis 15,5 Gew.-%, Silizium aufweist.

9. Verfahren zum Herstellen eines Bauteils (10), mit den Schritten:
- Bereitstellen eines Pulvers oder eines Drahts, wobei das Pulver oder der Draht aus einer Aluminiumlegierung gebildet ist, welche aufweist:
∘ 12 Gew.-% bis 40 Gew.-% Silizium;
∘ 0,3 Gew.-% bis 4 Gew.-% Kupfer;
∘ 0,2 Gew.-% bis 0,7 Gew.-% Magnesium;
∘ maximal 1 Gew.-% Eisen;
∘ maximal 0,5 Gew.-% Zirkonium;
und als Rest Aluminium mit einzeln jeweils maximal 0,30 Gew.-% und insgesamt maximal 1,5 Gew.-% herstellungsbedingten Verunreinigungen ; und
- Herstellen zumindest eines Teilbereiches (TB) des Bauteils (10) aus dem Pulver oder dem Draht mittels zumindest eines additiven Fertigungsverfahrens.

10. Verfahren nach Anspruch 9,
**dadurch gekennzeichnet, dass**
das Bauteil (10) zumindest teilweise, insbesondere zumindest in dem Teilbereich (TB), mindestens einem Wärmebehandlungsverfahren unterzogen wird.

## Claims

1. Component (10), which is produced at least in a sub-region (TB) by means of an additive manufacturing method, wherein at least the sub-region (TB) is made of an aluminum alloy which comprises:
- 12 wt.% to 40 wt.% silicon;
- 0.3 wt.% to 4 wt.% copper;
- 0.2 wt.% to 0.7 wt.% magnesium;
- at most 1 wt.% iron;
- at most 0.5 wt.% zirconium;
and, as the remainder, aluminum having in each case specifically at most 0.30 wt.% and in total at most 1.5 wt.% additional tramp elements and/or production-related impurities, wherein the additional tramp elements and/or production-related impurities are nickel, manganese, titanium, zinc, vanadium, chromium, molybdenum, strontium.

2. Component (10) according to claim 1,
**characterized in that**
the aluminum alloy has 0.3 wt.% to 2.1 wt.%, in particular 0.5 wt.% to 0.8 wt.% copper.

3. Component (10) according to claim 1 or 2,
**characterized in that**
the aluminum alloy has 0.2 wt.% to 0.6 wt.%, in particular 0.2 wt.% to 0.5 wt.% magnesium.

4. Component (10) according to any of the preceding claims,
**characterized in that**
the aluminum alloy has at least 0.05 wt.% and at most 0.35 wt.% zirconium.

5. Component (10) according to any of the preceding claims,
**characterized in that**
the aluminum alloy has at most 0.5 wt.%, in particular at most 0.35 wt.% iron.

6. Component (10) according to any of the preceding claims,
**characterized in that**
the component (10) is at least partially heat-treated.

7. Component (10) according to claim 6,
**characterized in that**
the component (10) is at least partially stress-relieved and/or solution heat treated and/or artificially aged.

8. Component (10) according to any of the preceding claims,
**characterized in that**
the aluminum alloy has 12 wt.% to 18 wt.%, in particular 13.5 wt.% to 15.5 wt.% silicon.

9. Method for producing a component (10), comprising the steps of:
- providing a powder or a wire, wherein the powder or the wire is formed from an aluminum alloy, which has:
∘ 12 wt.% to 40 wt.% silicon;
∘ 0.3 wt.% to 4 wt.% copper;
∘ 0.2 wt.% to 0.7 wt.% magnesium;
∘ at most 1 wt.% iron;
∘ at most 0.5 wt.% zirconium;
and, as the remainder, aluminum having in each case specifically at most 0.30 wt.% and in total at most 1.5 wt.% production-related impurities; and
- producing at least one sub-region (TB) of the component (10) from the powder or the wire by means of at least one additive manufacturing method.

10. Method according to claim 9,
**characterized in that**
the component (10) is at least partially subjected to at least one heat treatment method, in particular at least in the sub-region (TB).

## Revendications

1. Composant (10), lequel est fabriqué au moins dans une zone partielle (TB) au moyen d'un procédé de fabrication additive, au moins la zone partielle (TB) étant fabriquée à partir d'un alliage d'aluminium, lequel présente :
- 12 % en poids à 40 % en poids de silicium ;
- 0,3 % en poids à 4 % en poids de cuivre ;
- 0,2 % en poids à 0,7 % en poids de magnésium ;
- au maximum 1 % en poids de fer ;
- au maximum 0,5 % en poids de zirconium ;
et le reste étant constitué d'aluminium avec, individuellement, au maximum 0,30 % en poids et, au total, au maximum 1,5 % en poids d'autres éléments d'accompagnement et/ou d'impuretés liées à la fabrication, les autres éléments d'accompagnement et/ou impuretés lies à a fabrication étant du nickel, du manganèse, du titan, du zinc, du vanadium, du chrome, du molybdène, du strontium.

2. Composant (10) selon la revendication 1,
**caractérisé en ce que**
l'alliage d'aluminium présente de 0,3 % en poids à 2,1 % en poids, en particulier de 0,5 % en poids à 0,8 % en poids, de cuivre.

3. Composant (10) selon la revendication 1 ou 2,
**caractérisé en ce que**
l'alliage d'aluminium présente de 0,2 % en poids à 0,6 % en poids, en particulier de 0,2 % en poids à 0,5 % en poids, de magnésium.

4. Composant (10) selon l'une des revendications précédentes,
**caractérisé en ce que**
l'alliage d'aluminium présente au moins 0,05 % en poids et au maximum 0,35 % en poids de zirconium.

5. Composant (10) selon l'une des revendications précédentes,
**caractérisé en ce que**
l'alliage d'aluminium présente au maximum 0,5 % en poids, en particulier au maximum 0,35 % en poids, de fer.

6. Composant (10) selon l'une des revendications précédentes,
**caractérisé en ce que**
le composant (10) est au moins partiellement traité thermiquement.

7. Composant (10) selon la revendication 6,
**caractérisé en ce que**
le composant (10) est au moins partiellement détensionné par recuit et/ou recuit par mise en solution et/ou entreposé à chaud.

8. Composant (10) selon l'une des revendications précédentes,
**caractérisé en ce que**
l'alliage d'aluminium présente de 12 % en poids à 18 % en poids, en particulier de 13,5 % en poids à 15,5 % en poids, de silicium.

9. Procédé pour la fabrication d'un composant (10), comprenant les étapes de :
- fourniture d'une poudre ou d'un fil, la poudre ou le fil étant formé(e) d'un alliage d'aluminium, lequel présente :
o 12 % en poids à 40 % en poids de silicium ;
o 0,3 % en poids à 4 % en poids de cuivre ;
o 0,2 % en poids à 0,7 % en poids de magnésium ;
o au maximum 1 % en poids de fer ;
o au maximum 0,5 % en poids de zirconium ;
et le reste étant constitué d'aluminium avec, individuellement, au maximum 0,30 % en poids et, au total, au maximum 1,5 % en poids d'impuretés liées à la fabrication ; et
- fabrication d'au moins une zone partielle (TB) du composant (10) à partir de la poudre ou du fil au moyen d'au moins un procédé de fabrication additive.

10. Procédé selon la revendication 9,
**caractérisé en ce que**
le composant (10) est soumis au moins partiellement, en particulier au moins dans la zone partielle (TB), à au moins un procédé de traitement thermique.
